(19) Europäisches Patentamt

European Patent Office

Office européen des brevets

(11) **EP 4 323 939 B1**

(12) **EUROPEAN PATENT SPECIFICATION**

(45) Date of publication and mention
of the grant of the patent:
**26.11.2025 Bulletin 2025/48**

(21) Application number: **22721747.8**

(22) Date of filing: **08.04.2022**

(51) International Patent Classification (IPC):
**G06Q 10/08** (2024.01)

(52) Cooperative Patent Classification (CPC):
**G06Q 10/083**

(86) International application number:
**PCT/EP2022/059467**

(87) International publication number:
**WO 2022/218865 (20.10.2022 Gazette 2022/42)**

(54) **SYSTEM FOR DETECTING COUNTERFEIT PRODUCTS**

SYSTEM ZUR ERKENNUNG VON FÄLSCHUNGEN

SYSTÈME DE DÉTECTION DES PRODUITS CONTREFAITS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.04.2021 EP 21168946**

(43) Date of publication of application:
**21.02.2024 Bulletin 2024/08**

(73) Proprietor: **Countercheck GmbH
10435 Berlin (DE)**

(72) Inventors:
• **UNVER, Fatih
10439 Berlin (DE)**
• **HAMILTON, Philip
10243 Berlin (DE)**

(74) Representative: **Plougmann Vingtoft a/s
Strandvejen 70
2900 Hellerup (DK)**

(56) References cited:
**US-A1- 2012 205 439     US-A1- 2014 217 177
US-A1- 2014 324 716**

**Description**

FIELD OF THE INVENTION

The present invention relates to a method for detecting a package containing a counterfeit product or an illegal product, preferably in a package sortation facility. Specifically, the invention relates to a method using a database, preferably connected to virtual machine, and a counterfeit algorithm for detecting a package containing a counterfeit product or an illegal product. Further, the present invention relates to a system and a computer program for detecting a package containing a counterfeit or an illegal product.

BACKGROUND OF THE INVENTION

Today's sorting facilities are not appropriate or optimized for detecting a package potentially containing a counterfeit or illegal product. Often the method of detecting a package containing a counterfeit or illegal product in a sorting facility around the nowadays existing sorting facilities, if any method at all, is to have a physical assistant, a human, going around the sorting facility and trying to spot packages looking suspicious and taking test samples - often of random packages. There is no specific system or systemized method to use in a sorting facility, when trying to detect potential counterfeit or illegal products early in the logistic chain, namely while sorting the packages before delivery to the end costumers.

This missing optimal method and/or system for detecting a package potentially containing counterfeit or illegal products in the sorting facility has the fatal consequence that it is extremely easy for a costumer to order a counterfeit or illegal product and have it delivered to the doorstep without consequences. Also, it is extremely easy for the producers/traders of counterfeit or illegal products to send the counterfeits or illegal products to the costumers without any consequences, since it is most unlikely that the packages containing a counterfeit or illegal product will be caught in the logistic/delivery chain - Therefore, small package delivery is today used to send fake goods directly to end-customer in a cheap, easy, fast and more or less risk-free way.

This is a huge problem for brands and for the police, since nothing stops the logistics firms from transporting illegal goods and there are thousands if not millions of counterfeit or illegal products packed in normal packages being delivered around the world every single day.

Hence, an improved method and/or system for detecting a package potentially containing a counterfeit or illegal product would be advantageous, and in particular a more efficient and/or reliable database system potentially using a virtual machine, and a counterfeit algorithm would be advantageous.

Document US 2014/324716 A1 discloses an architecture to provide disincentives to wearing counterfeit or stolen merchandise in public, utilizing a unique identifier associated with each unit of the product.

Document Us 2014/ 217177 A1 refers to monitoring movable articles, e.g. for detecting counterfeits.

OBJECT OF THE INVENTION

It is an object of the present invention to provide an alternative to the prior art. In particular, it may be seen as an object of the present invention to provide a method, a computer program and/or system that solves the above mentioned problems with counterfeit and illegal products in the logistic chain.

SUMMARY OF THE INVENTION

Thus, the above described object and several other objects are intended to be obtained in a first aspect of the invention by providing a method for detecting a package containing a counterfeit product, preferably in a package sortation facility, wherein the method comprises the steps of:

- providing at least one counterfeit database comprising information of previously found counterfeit packages,
- providing data of information of at least one package, preferably visible information, the information being at least one of:

    - text data;
    preferably being data of the sender and/or receiver of the package such as one or more of name, company, address, postcode, phone number, and/or
    - image data;
    preferably being data of one or more of stickers on the package, such as barcode or logo, delivery partner, customs declaration, shipping label, packaging material, packaging colour, physical information data, such as size or weight,

- uploading and storing the provided data, preferably text and/or image, to the counterfeit database,
- comparing the provided data of the package to data already stored in the counterfeit database and search for matches,
- detecting exact data matches or high similarity data matches,

  - if any exact matches or high similarity matches;

    - determine the possibility, preferably in %, of the package being a counterfeit package by using a counterfeit comparison algorithm,
    - if the counterfeit possibility is higher than a pre-determined threshold, the package is selected for further investigation,

      - if further investigation results in a positive counterfeit determination, handing over the package to the responsible, preferably the Customs for possible seizure, or
      - if further investigation result in a negative counterfeit determination, the package is free to proceed as normal, or
      - if it is not clear whether the content of the package is being a counterfeit, communicating with the IP owners and share data of the package and then take a decision on the content of the package being counterfeit or not, or

  - if none exact matches or high similarity matches, no further analysis is made.

In the context of the present invention, a 'counterfeit database" may be understood as a database being a collection of information about previously detected counterfeit packages that is organized so that it can be easily accessed, managed and updated. However, the database might also comprise other stored data and information besides the counterfeit data. Typically, such counterfeit databases may be started, handled and/or maintained by the IP owners of the brand potentially being counterfeited.

In the context of the present invention, a 'visible information" may be understood as anything visible on a package that can help to detect a counterfeit package. Also within the invention, 'data' and 'information' might be seen as synonyms.

In the context of the present invention, a 'package" may be understood as anything that in some way is packed for delivery. There is no limitation of the dimensions, form, weight, packaging, and it could also be worded as a parcel, luggage, or anything similar.

In the context of the present invention, a 'counterfeit package" may be understood as a package having a content being a counterfeit product.

In the context of the present invention, a 'IP owners" may be understood as the owners of the brand potentially being counterfeited. It could also be called the 'brand owners' or the like. The IP owners could e.g. be Burberry, Channel, Hugo Boss, etc.

In the context of the present invention, a 'Sortation facility" may be understood as a facility for sortation of packages comprising anything between a single (conveyor) belt to a big central package facility with hundreds of belts.

The invention is particularly, but not exclusively, advantageous for obtaining a systemized method, wherein the possibility of detecting a counterfeit package in the delivery chain, particularly in a sorter facility, is highly improved. This means that hundreds or even thousands of sortation centres around the world can be used to catch counterfeit packages before delivery to the end-costumer.

The invention makes this improvement possible by collecting and exploiting data from brands and logistics firms on one platform, wherein:

- Brands: upload the counterfeit data they already have to the counterfeit database.
- Logistics Firms: The invention establish a software layer and analyse packages at the point of sortation. This is the missing link on the open road between producers and end-customers.

This results in the invention being able to investigate counterfeit packages with an onsite facilitator and hand counterfeit over to Customs on behalf of brands.

The invention furthermore has the advantages of being designed to provide the missing link in the fight against counterfeiting and of being designed to provide brands with a full control of their counterfeit goods.

The missing link provides the benefits, especially for the brand owners:

- Proactive Tool: A proactive solution of software that is deployed into the logistic supply chain.

- Block Road to Customer: Direct stopping mechanism for brands to influence counterfeit route in real time.
- Network Effects: Brands stay in control of their data yet still benefit from network effects and be GDPR compliant.
- Current Data Upload: Brands already have the data required, so the upload is efficient in terms of person-hours.
- Inline with Brand Identity: No obtrusive marks or stickers distracting from the product; important to leading brands.

Logistics firms also benefit from the invention by:

- Additional Revenue: Logistics firms will create additional revenues from existing hardware.
- No Additional Hardware: The software can be installed onto current sorters with no intrusive changes made.
- Socially Responsible: They have a growing social awareness such as DPD's Geocheck compliance.
- Protects Potential Liability: The invention protect against future need to protect themselves as intermediaries under the law.
- Commercial Benefit: They demonstrate that they are an active and reliable partner towards Brands

In some embodiments, the method further comprises at least one of the steps of:

- standardizing text data of shipping information and making it comparable with other shipping information stored in the counterfeit database,
  and/or
- extracting information of image data and creating a mathematical representation of the image and making it comparable with other stored data in the counterfeit database.

Specifically, such embodiments are particularly, but not exclusively, advantageous for being able to make any potential data from a package comparable to the data already stored in a counterfeit database.

In some embodiments, the method further comprises the step of reading the text of an image by Optical Character Recognition (OCR) and/or video coding. Specifically, such embodiments are particularly, but not exclusively, advantageous for providing a very effective recognition method for reading the text of an image on a package, so that the data on the package can be compared to the data stored in the counterfeit database.

In some embodiments, the method further comprises the step of analysing the image data and creating digital information of the image.

Specifically, such embodiments are particularly, but not exclusively, advantageous for providing a very effective method for reading the text of an image on a package, so that the data on the package can be compared to the data stored in the counterfeit database.

In some embodiments, the method further comprises at least one of the steps of:

- making an image-to-image comparison of an image from a package and images stored in the counterfeit database, and thereby compare whether the same image data has been found on previously found counterfeit packages, and/or
- making an text-to-text comparison of text data from a package and text data stored in the database, and thereby compare whether the same text data, such as sender and/or receiver information, has been found on previously found counterfeit packages.

Specifically, such embodiments are particularly, but not exclusively, advantageous for having a method, which can both use text and/or image data from a package in a delivery chain to detect if it is a potential counterfeit package. Meaning, the method is both efficient if only pictures/images of a packages is provided or if only text-data of a package is provided. However, the method is also capable of including both image-data and text-data to compare with the data already stored in the counterfeit database.

In some embodiments, the text data and/or image data of the package is provided from at least one image taking in an associated package sortation facility.

Specifically, such embodiments are particularly, but not exclusively, advantageous for being efficient even though only a single picture of a package is available to the counterfeit database and comparison algorithm.

In some embodiments, if any text data matches is detected, the method further comprises the step:

- focusing on sender information by reading the shipping label using OCR and detect the sender of the package.

Specifically, such embodiments are particularly, but not exclusively, advantageous for providing an efficient method for detecting a potential counterfeit package by focusing on the information provided on the shipping label, being information, which will always be available on a package, since without a shipping label, a package will not be able to be shipped and delivered to the receiver.

Since, the information on the shipping label is easy to get access to and since it will always be on a package for delivery, the method of the invention is thereby always usable for any package, even though the only accessible information of a package is the shipping label information.

In some embodiments, if any image data matches, the method further comprises the step:

- focusing on stickers, logo, barcodes and/or custom objects.

Specifically, such embodiments are particularly, but not exclusively, advantageous for being able to compare data, which is often seen on counterfeit packages and which therefore is a very efficient way to detect a match of a previously found counterfeit package.

In some embodiments, the method further comprises the step of converting addresses, such as sender and/or receiver, to geo-coordinates, so as to virtually draw a radius around the geocode location, preferably about 200-20m radius, more preferably about 150-50m radius, most preferably about 100m radius. Specifically, such embodiments are particularly, but not exclusively, advantageous, since counterfeit senders usually do little changes on their addresses, and the invention should therefore not take too much attention on only one exact location.

For example: if they use 'Park Street. No 34 ...' for some packages, then they change the address to 'Park Street. No 36 ...'. Even though we have the first address in the database, this is not a match (catch) for the system. Therefore, to detect such small change in e.g. the address, within the invention, the addresses are converted to geo-coordinates, and then virtually a radius around the geocode location is drawn, most preferably about a 100-meter radius. If any address is in this range, that is a suspicion.

The formula can be such as:

$$X - | \text{ Distance } | = \% \text{ of possibility of being counterfeit.}$$

X is pre-defined radius in meters.

| Distance | is absolute value of the distance between two coordinates in meters. Calculation can be done by using Haversine formula and then take the absolute value of it.

In some embodiments, a local counterfeit database is provided and located at an associated sortation facility, and wherein the step of comparing the provided data of the package to data already stored in the counterfeit database and search for matches and the step of detecting exact data matches or high similarity data matches is made locally using a virtual machine connected to the local database.

In the context of the present invention, a 'virtual machine" may be understood as virtualization/emulation of a computer system wherein a comparison algorithm is deployed in the virtual machine.

Specifically, such embodiments are particularly, but not exclusively, advantageous, since sorting facilities of logistics firms is connected with the local counterfeit database by having a virtual machine in the sorter facility. The virtual machine is connected with the sorter systems in the facility. This means that the local counterfeit database, being connected to a virtual machine comprising a comparison algorithm, can work even in an off-line mode not being depending on any other databases or other information sources when calculating the possibility of a package containing a counterfeit product.

In some embodiments, a centralized counterfeit database is provided and located in a cloud and wirelessly connected to at least one associated sortation facility or to at least one local database at an associated sortation facility.

Specifically, such embodiments are particularly, but not exclusively, advantageous, since distributed computing results in a maximized performance and maximized information access.

The centralized database comprise all the data from all the potential local databases located in sorting facilities around the world, since all the local database provides new information/data to the centralized database. All the new information shared between one of the local databases and the centralized database is synchronized, preferably daily, with all the other local databases in the system.

In some embodiments, the centralized counterfeit database and the local database is wirelessly connected and wherein the databases is synchronizing (SYNC), preferably on a daily basis.

In some embodiments, the method further comprises the step of providing an online Content Management System (CMS) being connected to the counterfeit database, said CMS allowing brands to register and upload their data of known counterfeit information, said information preferably being:

- counterfeit delivery information such as name, company name, address, phone number, postcode of sender and/or receiver and/or importer of package,
- images of a previously caught counterfeit packages,
- any identifier might be located on a package for example stickers, logos, taping and packaging material, shipping label location, package size/weight, and/or

- any other relevant information on previously counterfeit.

Specifically, such embodiments are particularly, but not exclusively, advantageous by using a so called Know-Your-Costumer (KYC) Software for Logistics Firms.

Is it not required to provide all of the input types, such as text/image, for the brands, since the brands can provide only one type of input. However, the more information they provide - the more counterfeits is likely to be detected.

By partnering with Logistics Firms, the method allows the database to receive photos of packages during sortation. Then the virtual machine having a comparison algorithm deployed processes the images and compare the data that is extracted from those images with the data in the counterfeit database.

In some embodiments - when comparing text data - the comparison algorithm has the mathematical formula of:

$$\% \text{ of similarity} = \frac{(\text{number of matching characters})*2}{\text{number of characters (name1+name2)}}$$

and/or

$$\% \text{ of similarity} = \frac{(\text{number of matching words})*2}{\text{number of words (address1+address2)}}$$

Specifically, such embodiments are particularly, but not exclusively, advantageous for having a formula giving an outcome of a % of similarity, which is an effective and easy-to-handle outcome when detecting a potential counterfeit package.

In some embodiments, the method further comprises the step;
if any counterfeit possibility is detected by the counterfeit comparison algorithm, communicating with the associated package sortation facility and assigns a custom sorter chute for the package, said package goes to that chute automatically during sortation.

Specifically, such embodiments are particularly, but not exclusively, advantageous for providing method, wherein a detected potential counterfeit packages is sorted out from the sorting belt automatically. There is thereby no need for human interaction at the stage as everything can be done automatically.

In some embodiments, the further investigation of a package with counterfeit possibility includes conducting a visual check on the package and checking the content of the package, and

wherein the visual check is conducted by a facilitator, preferably a human facilitator, that opens the package and checks the content of the package, and
wherein the steps of conducting the visual check will change depending on the brand being represented or counterfeited in the content of the package.

Specifically, such embodiments are particularly, but not exclusively, advantageous for ensuring whether or not a detected potential counterfeit package is actually containing a counterfeit product or whether the package is not a counterfeit package comprising a counterfeit product. This might however also be done be a robot or via X-ray or the like.

In the context of the present invention, a "facilitator" may be understood as something or someone facilitating a check of a potential counterfeit package. The facilitator can be a human, but it can also be a robot. Furthermore, it can be automated and use methods such as X-ray for checking the content of a package.

In some embodiments, the results of the comparison and/or the investigation steps of the method is applied in for machine learning to train the counterfeit comparison algorithm for future counterfeit packages detections, preferably by adjusting the weighting of the comparison algorithm using the concept of:

- if the comparison algorithm makes a correct decision, the authenticity of the data used for decision making is increased, and
- if comparison algorithm makes a false decision, the authenticity of the data used for decision making is decreased.

Specifically, such embodiments are particularly, but not exclusively, advantageous for recording the actions made during the method in the database and thereby have an ongoing adjustment of the weighting of counterfeit decision algorithm to constantly improve the counterfeit algorithm.

The invention further relates to a second aspect, a system for detecting a package containing a counterfeit product in an associated package sortation facility, preferably by using the method of claim 1, wherein the system comprises;

- at least one counterfeit database comprising information of previously found counterfeit packages,
- at least one camera or scanner mounted on an associated package sortation facility, the camera taking images of each package during sortation, said images are sent to a database and used in a counterfeit comparison algorithm,
- a computer to execute the counterfeit comparison algorithm connected to the associated package sortation facility, the algorithm calculating a counterfeit possibility, preferably in %, of the package being a counterfeit package by comparison of previously detected counterfeits, and
- a facility for further investigation of a package if the counterfeit possibility is higher than a pre-determined threshold and the package is selected for further investigation.

This second aspect of the invention is particularly, but not exclusively, advantageous in that the method of the invention may be implemented in a system for detecting counterfeit packages.

In a third aspect, a computer program comprising instructions which, when the program is executed by a computer, cause the computer to carry out at least the following steps of the method of claim 1:

- comparing provided data of a package to data already stored in a counterfeit database and search for matches,
- detecting exact data matches or high similarity data matches,

    - if any exact matches or high similarity matches;

        - determine the possibility, preferably in %, of the package being a counterfeit package by using a counterfeit comparison algorithm,
        - if the counterfeit possibility is higher than a pre-determined threshold, the package is selected for further investigation,

    - if none exact matches or high similarity matches, no further analysis is made.

This aspect of the invention is particularly, but not exclusively, advantageous in that parts of the method according to the present invention may be implemented in a computer program for detecting counterfeit packages.

In a fourth aspect, a counterfeit database system comprising:

- a centralized counterfeit database and
- at least one local counterfeit database, preferably a plurality of local databases, wherein the centralized database and the at least one local counterfeit database is connected wirelessly via distributed computing.

In the context of the present invention, 'distributed computing' may be understood as the concept in which a bigger computation process is accomplished by splitting it into multiple smaller activities and performed as diverse systems, resulting in a maximized performance.

In a fifth aspect, a method for detecting a package, containing an illegal product such as drugs or illegitimate medicine, preferably in an associated package sortation facility, wherein the method comprises the steps of:

- providing at least one database for illegal packages (110, 111, 11) comprising information of previously found illegal packages,
- providing data of information of at least one package , preferably visible information, the information being at least one of:

    - text data;
      preferably being data of the sender and/or receiver of the package such as one or more of name, company, address, postcode, phone number, and/or
    - image data;
      preferably being data of one or more of stickers on the package, such as barcode or logo, delivery partner, customs declaration, shipping label, packaging material, packaging colour, physical information data, such as size or weight,

- uploading and storing the provided data, preferably text and/or image, to the database for illegal packages,
- comparing the provided data of the package to data already stored in the database and search for matches,
- detecting exact data matches or high similarity data matches,

    - if any exact matches or high similarity matches;

- determine the possibility, preferably in %, of the package being a package containing illegal products by using a comparison algorithm,
- if the possibility of an illegal product is higher than a pre-determined threshold, the package is selected for further investigation,
- if further investigation results in a positive illegal determination, handing over the package to the responsible, preferably the Police, or
- if further investigation result in a negative illegal determination, the package is free to proceed as normal, or
- if it is not clear whether the content of the package is being a illegal product, communicating with specialist and share data of the package and then take a decision on the content of the package being counterfeit or not, or

- if none exact matches or high similarity matches, no further analysis is made.

The invention is particularly, but not exclusively, advantageous for obtaining a systemized method wherein the possibility of detecting an illegal package in the delivery chain, particularly in a sorter facility, is highly improved. This means that hundreds or even thousands of sortation centres around the world can be used to catch illegal packages before delivery to the most likely criminal end-costumers. Also, the police might get accesses to information of the sender, most likely a criminal sender.

This method has a potential of becoming a very preferably method for the police to use when catching big criminal drug deliveries.

In the context of the present invention, a 'illegal product" may be understood as anything like unlawful drugs or medicine sold on the black market.

The first, second, third, fourth and fifth aspect of the present invention may each be combined with any of the other aspects. These and other aspects of the invention will be apparent from and elucidated with reference to the embodiments described hereinafter.

BRIEF DESCRIPTION OF THE FIGURES

The method and system for detecting a package containing a counterfeit product according to the invention will now be described in more detail with regard to the accompanying figures. The figures show one way of implementing the present invention and is not to be construed as being limiting to other possible embodiments falling within the scope of the attached claim set.

Figure 1 illustrates a catch flow-chart for detecting a potential counterfeit package in a sortation facility.
Figure 2 illustrates a flow-chart of the procedure of the further investigation.
Figure 3 illustrates the levels in the fight against counterfeiting.

Additional figures with comments are also enclosed for illustrating the invention.

DETAILED DESCRIPTION OF AN EMBODIMENT

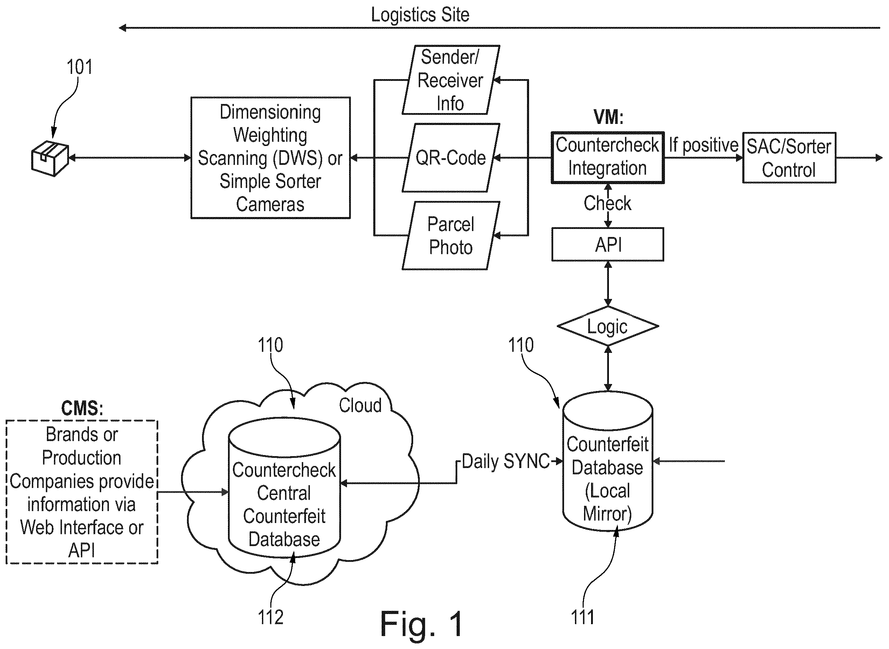

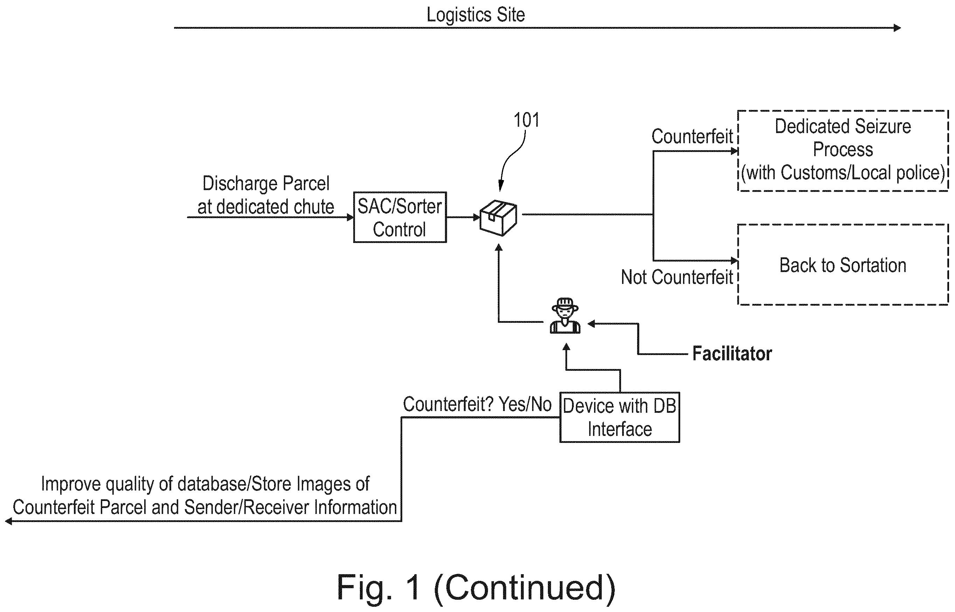

Figure 1 illustrates a catch flow-chart of detecting a possible counterfeit package within a sorting facility conducting sorter control e.g. via Sort Allocation Computer System (SAC). A package 101 within a sorting facility is going through a scanner using a Dimnesioning-Weightning-Scanner system (DWS) and/or a camera (such as simple sorter camera) taken an image and thereby potentially providing a local counterfeit database 111 with information of the package 101. The local counterfeit database 111 comprises information of previously found counterfeit packages. The information provided is preferably data of visible information of at least one package, the information being at least one of:

- text data;
  preferably being data of the sender and/or receiver of the package such as one or more of name, company, address, postcode, phone number, and/or
- image data;
  preferably being data of one or more of stickers on the package, such as barcode or logo, delivery partner, customs declaration, shipping label, packaging material, packaging colour, physical information data, such as size/dimension or weight,

After the information is provided, the information, preferably text and/or image data, is uploaded to the local counterfeit database (111) where it is stored and later or immediately uploaded and synchronized to a central counterfeit database (112). Preferably the synchronization between the local database and the central database is done on a daily bases, or even more often. There could be only one large central counterfeit database directly connected to the sorting facilities and thereby no local database. Or, only a local database not connected to any centralized database. However, both at least one local and a centralized database connected to each other is preferred in the invention.

The local database being for security reasons if the central database is for some reason out of reach.

After the data/information of the package is uploaded to the local database 111, the provided data of the package is compared to already stored data in the counterfeit database and a search for matches is done using a virtual machine (VM) comprising a counterfeit comparison algorithm coupled to the database - This is in the figure marked with "Countercheck integration". The virtual machine is doing the following:

- detecting exact data matches or high similarity data matches,

    - if any exact matches or high similarity matches;

        - determine the possibility, preferably in %, of the package being a counterfeit package by using a counterfeit comparison algorithm,
        - if the counterfeit possibility is higher than a pre-determined threshold, the package is selected for further investigation,

            - if further investigation results in a positive counterfeit determination, handing over the package to the responsible, preferably the Customs for possible seizure, or
            - if further investigation result in a negative counterfeit determination, the package is free to proceed as normal, or
            - if it's not clear whether the content of the package is being a counterfeit, communicating with the brand owners and share data of the package and then take a decision on the content of the package being counterfeit or not, or

    - if none exact matches or high similarity matches, no further analysis is made.

Furthermore, FIG. 1 illustrates an online Content Management System (CMS) being connected to the counterfeit database 112, said CMS allowing brands to register and upload their data of known counterfeit information, said information preferably being:

- counterfeit delivery information such as name, company name, address, phone number, postcode of sender and/or receiver and/or importer of package,
- images of a previously caught counterfeit packages,
- any identifier might be located on a package for example stickers, logos, taping and packaging material, shipping label location, package size/weight, and/or
- any other relevant information on previously counterfeit.

Also the figure illustrate, that the virtual machine (VM) communicates with the associated package sortation facility and assigns a custom sorter chute for the package, said package goes to that chute automatically during sortation if any counterfeit possibility is detected. A further investigation of a package with counterfeit possibility includes conducting a visual check on the package and checking the content of the package, and the visual check is conducted by a facilitator, that opens the package and checks the content of the package, and the steps of conducting the visual check will change depending on the brand being represented or counterfeited in the content of the package.

Moreover, the FIG. 1 illustrates a system for detecting a package containing a counterfeit product in an associated package sortation facility, preferably by using the method of claim 1, wherein the system comprises;

- at least one counterfeit database comprising information of previously found counterfeit packages,
- at least one camera or scanner mounted on an associated package sortation facility, the camera taking images of each package during sortation, said images are sent to a database and used in a counterfeit comparison algorithm,
- a computer to execute the counterfeit comparison algorithm connected to the associated package sortation facility, the algorithm calculating a counterfeit possibility, preferably in %, of the package being a counterfeit package by comparison of previously detected counterfeits, and
- a facility for further investigation of a package if the counterfeit possibility is higher than a pre-determined threshold and the package is selected for further investigation.

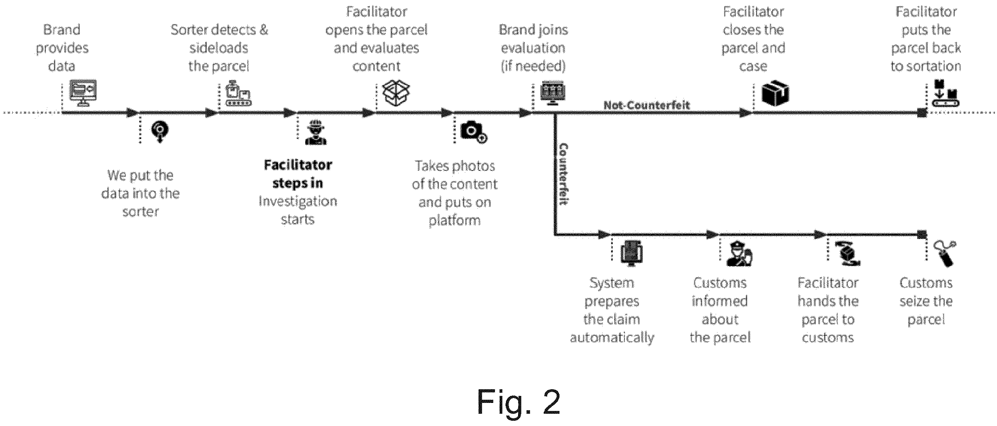

FIG. 2 illustrates a flow-chart of the procedure of the further investigation if a possible counterfeit package is detected.

When a potential counterfeit package is detected, a counterfeit comparison algorithm communicates with the associated package sortation facility and assigns a custom sorter chute for the package, said package goes to that chute automatically during sortation if any counterfeit possibility is detected.

If the counterfeit possibility is higher than a pre-determined threshold, the package is selected for further investigation,

- if further investigation results in a positive counterfeit determination, handing over the package to the responsible, preferably the Customs for possible seizure, or
- if further investigation result in a negative counterfeit determination, the package is free to proceed as normal, or
- if it's not clear whether the content of the package is being a counterfeit, communicating with the brand owners and share data of the package and then take a decision on the content of the package being counterfeit or not.

The further investigation of a package with counterfeit possibility includes conducting a visual check on the package and checking the content of the package, and the visual check is conducted by a facilitator, that opens the package and checks the content of the package, and the steps of conducting the visual check will change depending on the brand being represented or counterfeited in the content of the package.

The results of the comparison and/or the investigation steps of the method is applied in for machine learning to train the counterfeit comparison algorithm for future counterfeit packages detections, preferably by adjusting the weighting of the comparison algorithm using the concept of:

- if the comparison algorithm makes a correct decision, the authenticity of the data used for decision making is increased, and
- if the comparison algorithm makes a false decision, the authenticity of the data used for decision making is decreased.

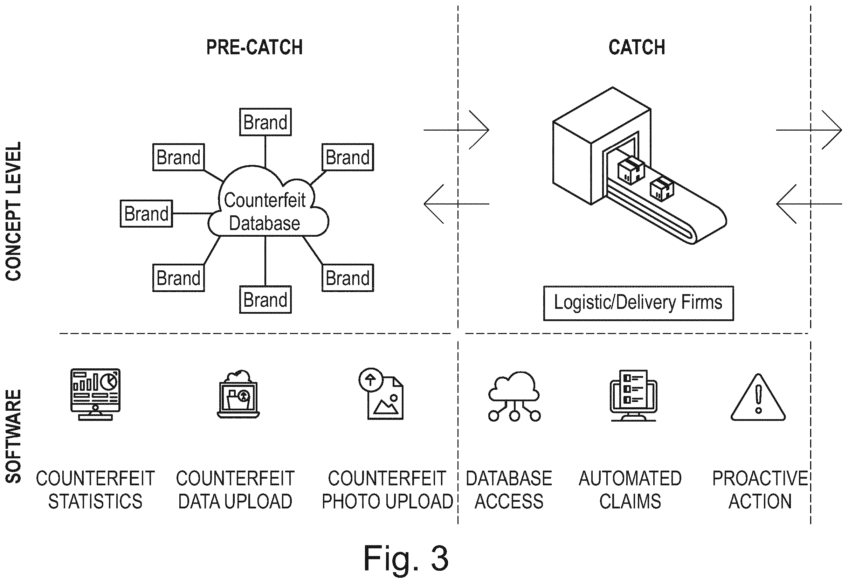

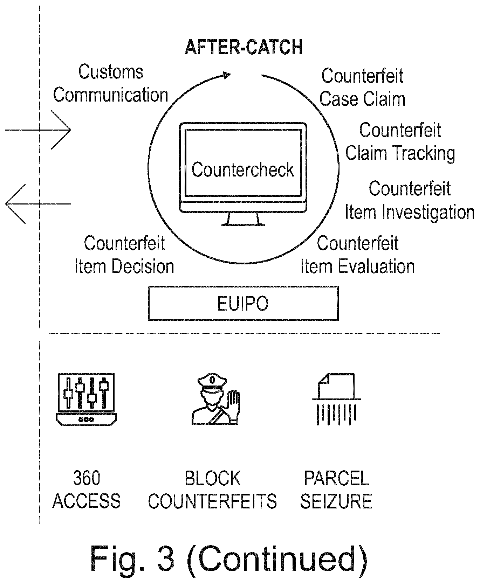

FIG. 3 illustrates the levels in the fight against counterfeiting.

In the FIG. 3, three conceptual levels are illustrated and also who will be a part of the levels and benefit from the levels is illustrated.

1. Pre-Catch → The brands providing and getting information from the counterfeit database.
2. Catch → The delivery firms will not deliver counterfeit content if the counterfeit packages is detected in the sortation before delivery.
3. After-Catch → The EUIPO is helped at ensuring the value of an intellectual property right, such as a trademark.

These are the three concept levels wherein the present invention makes a link between the levels.

Also the software of the three concept levels are illustrated.

1. Pre-Catch level:

- Counterfeit statistic
- Counterfeit Data upload
- Counterfeit Photo upload

2. Catch level:

- Database access
- Automatic claims
- Proactive action

3. After-Catch level:

- 360 access
- Block counterfeits
- Package seizure

In short the invention relates to a method for detecting a package containing a counterfeit product, preferably in an associated package sortation facility, wherein the method comprises the steps of providing at least one counterfeit database comprising information of previously found counterfeit packages, providing data of information of at least one package, preferably visible information, the information being at least one of text data and/or image data, uploading and storing the provided data, preferably text and/or image, to the counterfeit database, comparing the provided data of the package to data already stored in the counterfeit database and search for matches, detecting exact data matches or high similarity data matches, if any exact matches or high similarity matches; determine the possibility, preferably in %, of the package being a counterfeit package by using a counterfeit comparison algorithm.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A computer-implemented method for detecting a package containing a counterfeit product in an associated package sortation facility, wherein the method comprises the steps of:

   - providing at least one counterfeit database (110, 111, 11) comprising information of previously found counterfeit packages,
   - providing data of information of at least one package (101), visible information, the information being at least one of:

     - text data;
     preferably being data of the sender and/or receiver of the package (101) such as one or more of name, company, address, postcode, phone number, and/or
     - image data;
     being data of one or more of stickers on the package, such as barcode or logo, delivery partner, customs declaration, shipping label, packaging material, packaging colour, physical information data, such as size or weight,

   - uploading and storing the provided data, text and/or image, to the counterfeit database (110, 111, 112),
   - comparing the provided data of the package to data already stored in the counterfeit database and search for matches,
   - detecting exact data matches or high similarity data matches,

     - if any exact matches or high similarity matches;

       - determine the possibility, in %, of the package being a counterfeit package by using a counterfeit comparison algorithm,
       - if the counterfeit possibility is higher than a pre-determined threshold, the package is selected for further investigation,

         - if further investigation results in a positive counterfeit determination, handing over the package to the responsible entity, the Customs for possible seizure, or
         - if further investigation results in a negative counterfeit determination, the package is free to proceed as normal, or
         - if it is not clear whether the content of the package is being a counterfeit, communicating with the IP owners and share data of the package and then take a decision on the content of the package being counterfeit or not, or

     - if none exact matches or high similarity matches, no further analysis is made,

   wherein the method further comprises the step;
   - if any counterfeit possibility is detected by the counterfeit comparison algorithm, communicating with the associated package sortation facility and assigns a custom sorter chute for the package (101), said package goes to that chute automatically during sortation.

2. A method according to claim 1, wherein the method further comprises at least one of the steps of:

 - standardizing text data of shipping information and making it comparable with other shipping information stored in the counterfeit database (110, 111, 112),
 and/or
 - extracting information of image data and creating a mathematical representation of the image and making it comparable with other stored data in the counterfeit database (110, 111, 112).

3. A method according to any of the preceding claims, wherein the method further comprises the step of reading the text of an image by Optical Character Recognition (OCR) and/or video coding.

4. A method according to any of the preceding claims, wherein the method further comprises the step of analysing the image data and creating digital information of the image.

5. A method according to any of the preceding claims, wherein the method further comprises at least one of the steps of:

 - making an image-to-image comparison of an image from a package (101) and images stored in the counterfeit database (110, 111, 112), and thereby compare whether the same image data has been found on previously found counterfeit packages, and/or
 - making a text-to-text comparison of text data from a package (101) and text data stored in the database (110, 111, 112), and thereby compare whether the same text data, such as sender and/or receiver information, has been found on previously found counterfeit packages.

6. A method according to any of the preceding claims, wherein the method further comprises the step of converting addresses, such as sender and/or receiver, to geo-coordinates, so as to virtually draw a radius around the geocode location, a 200-20m radius.

7. A method according to any of the preceding claims, wherein a local counterfeit database (111) is provided and located at an associated sortation facility, and wherein the step of comparing the provided data of the package (101) to data already stored in the counterfeit database and search for matches and the step of detecting exact data matches or high similarity data matches is made locally using a virtual machine connected to the local database.

8. A method according to any of the preceding claims, wherein the method further comprises the step of providing an online Content Management System (CMS) being connected to the counterfeit database (110, 111, 112), said CMS allowing brands to register and upload their data of known counterfeit information, said information being:

 - counterfeit delivery information such as name, company name, address, phone number, postcode of sender and/or receiver and/or importer of package (101),
 - images of a previously caught counterfeit packages,
 - any identifier might be located on a package for example stickers, logos, taping and packaging material, shipping label location, package size/weight, and/or
 - any other relevant information on previously counterfeit.

9. A method according to any of the preceding claims, wherein - when comparing text data - the comparison algorithm has the mathematical formula of:

$$\% \text{ of similarity} = \frac{(\text{number of matching characters})*2}{\text{number of characters (name1+name2)}}$$

and/or

$$\% \text{ of similarity} = \frac{(\text{number of matching words})*2}{\text{number of words (address1+address2)}}$$

10. A method according to any of the preceding claims, wherein the further investigation of a package (101) with counterfeit possibility includes conducting a visual check on the package and checking the content of the package, and wherein the visual check is conducted by a facilitator, a human facilitator, that opens the package and checks the content of the package, and wherein the steps of conducting the visual check will change depending on the brand being represented or counterfeited in the content of the package.

11. A method according to any of the preceding claims, wherein the results of the comparison and/or the investigation steps of the method is applied in for machine learning to train the counterfeit comparison algorithm for future counterfeit packages detections, by adjusting the weighting of the comparison algorithm using the concept of:

    - if the comparison algorithm makes a correct decision, the authenticity of the data used for decision making is increased, and
    - if comparison algorithm makes a false decision, the authenticity of the data used for decision making is decreased.

12. A system for detecting a package containing a counterfeit product in an associated package sortation facility, by using the method of claim 1, wherein the system comprises;

    - at least one counterfeit database (110, 111, 112) comprising information of previously found counterfeit packages (101),
    - at least one camera or scanner mounted in, or on, an associated package sortation facility, the camera taking images of each package during sortation, said images are sent to a database and used in a counterfeit comparison algorithm,
    - a computer to execute the counterfeit comparison algorithm connected to the associated package sortation facility, the algorithm calculating a counterfeit possibility, in %, of the package being a counterfeit package by comparison of previously detected counterfeits, and
    - a facility for further investigation of a package if the counterfeit possibility is higher than a pre-determined threshold and the package is selected for further investigation.

13. A counterfeit database (110) system for implementing the method of claim 1, comprising:

    - a centralized counterfeit database (112) and
    - at least one local counterfeit database (111), or a plurality of local databases, wherein the centralized database and the at least one local counterfeit database is connected via distributed computing.

14. A computer program comprising instructions which, when the program is executed by a computer, cause the computer to carry out at least the following steps of the method of claim 1:

    - comparing provided data of a package (101) to data already stored in a counterfeit database (110, 111, 112) and search for matches, and
    - detecting exact data matches or high similarity data matches,

        - if any exact matches or high similarity matches;

            - determine the possibility, preferably in %, of the package being a counterfeit package by using a counterfeit comparison algorithm,
            - if the counterfeit possibility is higher than a pre-determined threshold, the package is selected for further investigation,

        - if none exact matches or high similarity matches, no further analysis is made.

15. A computer-implemented method for detecting a package, containing an illegal product, such as drugs or illegitimate medicine in an associated package sortation facility, wherein the method comprises the steps of:

    - providing at least one database for illegal packages (110, 111, 11) comprising information of previously found illegal packages,
    - providing data of information of at least one package (101), visible information, the information being at least one of:

- text data;

being data of the sender and/or receiver of the package (101) such as one or more of name, company, address, postcode, phone number, and/or
- image data;

being data of one or more of stickers on the package, such as barcode or logo, delivery partner, customs declaration, shipping label, packaging material, packaging colour, physical information data, such as size or weight,

- uploading and storing the provided data, preferably text and/or image, to the database for illegal packages (110, 111, 112),
- comparing the provided data of the package to data already stored in the database and search for matches,
- detecting exact data matches or high similarity data matches,

- if any exact matches or high similarity matches;

- determine the possibility, in %, of the package being a package containing illegal products by using a comparison algorithm,
- if the possibility of an illegal product is higher than a pre-determined threshold, the package is selected for further investigation,

- if further investigation results in a positive illegal determination, handing over the package to the responsible entity, the Customs and/or the Police, or
- if further investigation results in a negative illegal determination, the package is free to proceed as normal, or
- if it is not clear whether the content of the package is being a illegal product, communicating with a specialist, from the Customs and/or the Police, and share data of the package and then take a decision on the content of the package being counterfeit or not, or

- if none exact matches or high similarity matches, no further analysis is made,

wherein the method further comprises the step;
- if any containing an illegal product is detected by the comparison algorithm, communicating with the associated package sortation facility and assigns a custom sorter chute for the package (101), said package goes to that chute automatically during sortation.

**Patentansprüche**

1. Computerimplementiertes Verfahren zum Erkennen eines Pakets, das ein gefälschtes Produkt enthält, in einer zugehörigen Paketsortieranlage, wobei das Verfahren die folgenden Schritte umfasst:

- Bereitstellen mindestens einer Fälschungsdatenbank (110, 111, 11), die Informationen über zuvor gefundene gefälschte Pakete umfasst,
- Bereitstellen von Daten mit Informationen über mindestens ein Paket (101), sichtbaren Informationen, wobei es sich bei den Informationen um mindestens eines von Folgendem handelt:

- Textdaten;
vorzugsweise wobei es sich um Daten des Absenders und/oder Empfängers des Pakets (101) handelt, wie etwa eines oder mehrere aus Name, Firma, Adresse, Postleitzahl, Telefonnummer, und/oder
- Bilddaten;
wobei es sich um Daten von einem oder mehreren von Aufklebern auf dem Paket, wie etwa Barcode oder Logo, Lieferpartner, Zollerklärung, Versandetikett, Verpackungsmaterial, Verpackungsfarbe, physische Informationsdaten, wie etwa Größe oder Gewicht, handelt,
- Hochladen und Speichern der bereitgestellten Daten, Text und/oder Bild, in die Fälschungsdatenbank (110, 111, 112),
- Vergleichen der bereitgestellten Daten des Pakets mit bereits in der Fälschungsdatenbank gespeicherten Daten und Suche nach Übereinstimmungen,
- Erkennen von exakten Datenübereinstimmungen oder Datenübereinstimmungen mit hoher Ähnlichkeit,

- bei exakten Übereinstimmungen oder Übereinstimmungen mit hoher Ähnlichkeit;
- Bestimmen der Möglichkeit in %, dass es sich bei dem Paket um ein gefälschtes Paket handelt, unter Verwendung eines Fälschungsvergleichsalgorithmus,
- wenn die Fälschungsmöglichkeit höher als ein zuvor bestimmter Schwellenwert ist, wird das Paket für eine weitere Untersuchung ausgewählt,

- wenn eine weitere Untersuchung eine positive Fälschungsfeststellung ergibt, Übergabe des Pakets an die zuständige Stelle, den Zoll, zur möglichen Beschlagnahme, oder
- wenn eine weitere Untersuchung eine negative Fälschungsfeststellung ergibt, kann das Paket wie gewohnt weiterbefördert werden, oder
- wenn es nicht klar ist, ob es sich bei dem Inhalt des Pakets um eine Fälschung handelt, Kommunizieren mit den Schutzrechtsinhabern und Austauschen von Daten über das Paket und dann Treffen einer Entscheidung darüber, ob es sich bei dem Inhalt des Pakets um eine Fälschung handelt oder nicht, oder

- bei keinen exakten Übereinstimmungen oder Übereinstimmungen mit hoher Ähnlichkeit wird keine weitere Analyse vorgenommen,
wobei das Verfahren ferner den folgenden Schritt umfasst;
- wenn durch den Fälschungsvergleichsalgorithmus eine Fälschungsmöglichkeit erkannt wird, Kommunizieren mit der zugehörigen Paketsortieranlage und Zuweisen einer eigenen Sortierrutsche für das Paket (101), wobei das Paket während der Sortierung automatisch zu dieser Rutsche gelangt.

2. Verfahren nach Anspruch 1, wobei das Verfahren ferner mindestens einen der folgenden Schritte umfasst:

- Standardisieren von Textdaten von Versandinformationen und Vergleichbarmachen dieser mit anderen in der Fälschungsdatenbank (110, 111, 112) gespeicherten Versandinformationen, und/oder
- Extrahieren von Informationen aus Bilddaten und Erstellen einer mathematischen Darstellung des Bildes und Vergleichbarmachen dieser mit anderen in der Fälschungsdatenbank (110, 111, 112) gespeicherten Daten.

3. Verfahren nach irgendeinem der vorhergehenden Ansprüche, wobei das Verfahren ferner den Schritt des Lesens des Textes eines Bildes durch Optische Zeichenerkennung (OCR) und/oder Videocodierung umfasst.

4. Verfahren nach irgendeinem der vorhergehenden Ansprüche, wobei das Verfahren ferner den Schritt des Analysierens der Bilddaten und des Erzeugens digitaler Informationen des Bildes umfasst.

5. Verfahren nach irgendeinem der vorhergehenden Ansprüche, wobei das Verfahren ferner mindestens einen der folgenden Schritte umfasst:

- Vornehmen eines Bild-zu-Bild-Vergleichs eines Bildes von einem Paket (101) mit Bildern, die in der Fälschungsdatenbank (110, 111, 112) gespeichert sind, und dadurch Vergleichen, ob dieselben Bilddaten auf zuvor gefundenen gefälschten Paketen gefunden worden sind, und/oder
- Vornehmen eines Text-zu-Text-Vergleichs von Textdaten von einem Paket (101) mit Textdaten, die in der Datenbank (110, 111, 112) gespeichert sind, und dadurch Vergleichen, ob dieselben Textdaten, wie etwa Sender- und/oder Empfängerinformationen, auf zuvor gefundenen gefälschten Paketen gefunden worden sind.

6. Verfahren nach irgendeinem der vorhergehenden Ansprüche, wobei das Verfahren ferner den Schritt des Umwandelns von Adressen, wie etwa Absender und/oder Empfänger, in Geokoordinaten umfasst, so dass virtuell ein Radius um den Geocode-Standort, ein Radius von 200-20 m, gezogen wird.

7. Verfahren nach irgendeinem der vorhergehenden Ansprüche, wobei eine lokale Fälschungsdatenbank (111) bereitgestellt wird und sich in einer zugehörigen Sortieranlage befindet, und wobei der Schritt des Vergleichens der bereitgestellten Daten des Pakets (101) mit bereits in der Fälschungsdatenbank gespeicherten Daten und der Suche nach Übereinstimmungen und der Schritt des Erkennens exakter Datenübereinstimmungen oder Datenübereinstimmungen mit hoher Ähnlichkeit lokal unter Verwendung einer mit der lokalen Datenbank verbundenen virtuellen Maschine durchgeführt werden.

8. Verfahren nach irgendeinem der vorhergehenden Ansprüche, wobei das Verfahren ferner den Schritt des Bereitstellens eines Online-Inhaltsverwaltungssystems (CMS) umfasst, das mit der Fälschungsdatenbank (110, 111, 112) verbunden ist, wobei das CMS es Handelsmarken ermöglicht, ihre Daten bekannter Fälschungsinformationen zu registrieren und hochzuladen, wobei es sich bei den Informationen um Folgende handelt:

- gefälschte Lieferinformationen, wie etwa Name, Firmenname, Adresse, Telefonnummer, Postleitzahl des Absenders und/oder Empfängers und/oder Importeurs des Pakets (101),
- Bilder von zuvor beschlagnahmten gefälschten Paketen,
- eine beliebige Kennung, die sich auf einem Paket befinden kann, zum Beispiel Aufkleber, Logos, Klebeband und Verpackungsmaterial, Position des Versandetiketts, Größe/Gewicht des Pakets und/oder
- beliebige andere relevante Informationen über frühere Fälschungen.

9. Verfahren nach irgendeinem der vorhergehenden Ansprüche, wobei - beim Vergleichen der Textdaten - der Vergleichsalgorithmus die folgende mathematische Formel aufweist:

$$\% \text{ der Ähnlichkeit } = \frac{(\text{Anzahl der übereinstimmenden Zeichen}) * 2}{\text{Anzahl der Zeichen (Name1 + Name2)}}$$

und/oder

$$\% \text{ der Ähnlichkeit } = \frac{(\text{Anzahl der übereinstimmenden Wörter}) * 2}{\text{Anzahl der Wörter (Adresse1 + Adresse2)}}$$

10. Verfahren nach irgendeinem der vorhergehenden Ansprüche, wobei die weitere Untersuchung eines Pakets (101) mit Fälschungsmöglichkeit das Durchführen einer Sichtprüfung des Pakets und das Überprüfen des Inhalts des Pakets einschließt, und

wobei die Sichtprüfung durch einen Helfer, einen menschlichen Helfer, durchgeführt wird, der das Paket öffnet und den Inhalt des Pakets überprüft, und
wobei die Schritte des Durchführens der Sichtprüfung sich in Abhängigkeit von der im Inhalt des Pakets dargestellten oder gefälschten Handelsmarke ändern.

11. Verfahren nach irgendeinem der vorhergehenden Ansprüche, wobei die Ergebnisse der Vergleichs- und/oder der Untersuchungsschritte des Verfahrens für das maschinelle Lernen angewendet werden, um den Fälschungsvergleichsalgorithmus für zukünftige Erkennungen von gefälschten Paketen zu trainieren, indem die Gewichtung des Vergleichsalgorithmus unter Verwendung des folgenden Konzepts angepasst wird:

- wenn der Vergleichsalgorithmus eine korrekte Entscheidung trifft, wird die Authentizität der für die Entscheidungsfindung verwendeten Daten erhöht, und
- wenn der Vergleichsalgorithmus eine falsche Entscheidung trifft, wird die Authentizität der für die Entscheidungsfindung verwendeten Daten verringert.

12. System zum Erkennen eines Pakets, das ein gefälschtes Produkt enthält, in einer zugehörigen Paketsortieranlage, unter Verwendung des Verfahrens nach Anspruch 1, wobei das System Folgendes umfasst;

- mindestens eine Fälschungsdatenbank (110, 111, 112), die Informationen über zuvor gefundene gefälschte Pakete (101) umfasst,
- mindestens eine Kamera oder einen Scanner, der in oder an einer zugehörigen Paketsortieranlage angebracht ist, wobei die Kamera während der Sortierung Bilder von jedem Paket aufnimmt, wobei die Bilder an eine Datenbank gesendet und in einem Fälschungsvergleichsalgorithmus verwendet werden,
- einen Computer zum Ausführen des Fälschungsvergleichsalgorithmus, der mit der zugehörigen Paketsortieranlage verbunden ist, wobei der Algorithmus durch Vergleich mit zuvor erkannten Fälschungen die Fälschungsmöglichkeit in % berechnet, dass es sich bei dem Paket um ein gefälschtes Paket handelt, und
- eine Anlage zur weiteren Untersuchung eines Pakets, wenn die Fälschungsmöglichkeit höher als ein vorbestimmter Schwellenwert ist und das Paket zur weiteren Untersuchung ausgewählt wird.

13. System mit Fälschungsdatenbank (110) zum Implementieren des Verfahrens nach Anspruch 1, umfassend:

- eine zentralisierte Fälschungsdatenbank (112) und
- mindestens eine lokale Fälschungsdatenbank (111) oder eine Vielzahl lokaler Datenbanken,

wobei die zentralisierte Datenbank und die mindestens eine lokale Fälschungsdatenbank über eine verteilte Datenverarbeitung verbunden sind.

14. Computerprogramm, umfassend Anweisungen, die, wenn das Programm von einem Computer ausgeführt wird, den Computer veranlassen, mindestens die folgenden Schritte des Verfahrens nach Anspruch 1 auszuführen:

- Vergleichen der bereitgestellten Daten eines Pakets (101) mit bereits in einer Fälschungsdatenbank (110, 111, 112) gespeicherten Daten und Suche nach Übereinstimmungen, und
- Erkennen von exakten Datenübereinstimmungen oder Datenübereinstimmungen mit hoher Ähnlichkeit,

- bei exakten Übereinstimmungen oder Übereinstimmungen mit hoher Ähnlichkeit;

- Bestimmen der Möglichkeit in %, dass es sich bei dem Paket um ein gefälschtes Paket handelt, unter Verwendung eines Fälschungsvergleichsalgorithmus,
- wenn die Fälschungsmöglichkeit höher als ein zuvor bestimmter Schwellenwert ist, wird das Paket für weitere Untersuchungen ausgewählt,

- bei keinen exakten Übereinstimmungen oder Übereinstimmungen mit hoher Ähnlichkeit wird keine weitere Analyse vorgenommen.

15. Computerimplementiertes Verfahren zum Erkennen eines Pakets, das ein illegales Produkt, wie etwa Drogen oder unzulässige Arzneimittel, enthält, in einer zugehörigen Paketsortieranlage, wobei das Verfahren die folgenden Schritte umfasst:

- Bereitstellen mindestens einer Datenbank für illegale Pakete (110, 111, 11), die Informationen über zuvor gefundene illegale Pakete umfasst,
- Bereitstellen von Daten mit Informationen über mindestens ein Paket (101), sichtbaren Informationen, wobei es sich bei den Informationen um mindestens eines von Folgendem handelt:

- Textdaten;
wobei es sich um Daten des Absenders und/oder Empfängers des Pakets (101) handelt, wie etwa eines oder mehrere aus Name, Firma, Adresse, Postleitzahl, Telefonnummer, und/oder
- Bilddaten;
wobei es sich um Daten von einem oder mehreren von Aufklebern auf dem Paket, wie etwa Barcode oder Logo, Lieferpartner, Zollerklärung, Versandetikett, Verpackungsmaterial, Verpackungsfarbe, physische Informationsdaten, wie etwa Größe oder Gewicht, handelt,

- Hochladen und Speichern der bereitgestellten Daten, vorzugsweise Text und/oder Bild, in die Datenbank für illegale Pakete (110, 111, 112),
- Vergleichen der bereitgestellten Daten des Pakets mit bereits in der Datenbank gespeicherten Daten und Suche nach Übereinstimmungen,
- Erkennen von exakten Datenübereinstimmungen oder Datenübereinstimmungen mit hoher Ähnlichkeit,

- bei exakten Übereinstimmungen oder Übereinstimmungen mit hoher Ähnlichkeit;

- Bestimmen der Möglichkeit in %, dass es sich bei dem Paket um ein Paket handelt, das illegale Produkte enthält, unter Verwendung eines Vergleichsalgorithmus,
- wenn die Möglichkeit, dass es sich um ein illegales Produkt handelt, höher als ein zuvor bestimmter Schwellenwert ist, wird das Paket für eine weitere Untersuchung ausgewählt,
- wenn eine weitere Untersuchung eine positive Illegalitätsfeststellung ergibt, Übergabe des Pakets an die zuständige Stelle, den Zoll und/oder die Polizei, oder
- wenn eine weitere Untersuchung eine negative Illegalitätsfeststellung ergibt, kann das Paket wie gewohnt weiterbefördert werden, oder
- wenn es nicht klar ist, ob es sich bei dem Inhalt des Pakets um ein illegales Produkt handelt, Kommunizieren mit einem Spezialisten des Zolls und/oder der Polizei und Teilen der Daten des Pakets, und dann Treffen einer Entscheidung darüber, ob es sich bei dem Inhalt des Pakets um eine Fälschung handelt oder nicht, oder

- bei keinen exakten Übereinstimmungen oder Übereinstimmungen mit hoher Ähnlichkeit wird keine weitere Analyse vorgenommen,

wobei das Verfahren ferner den folgenden Schritt umfasst;
- wenn durch den Vergleichsalgorithmus ein Paket, das ein illegales Produkt enthält, erkannt wird, Kommunizieren mit der zugehörigen Paketsortieranlage und Zuweisen einer eigenen Sortierrutsche für das Paket (101), wobei das Paket während der Sortierung automatisch zu dieser Rutsche gelangt.

## Revendications

1. Procédé mis en œuvre par informatique permettant la détection d'un colis contenant un produit contrefait dans un centre de tri de colis associé, dans lequel le procédé comprend les étapes consistant à :

- la fourniture d'au moins une base de données sur les contrefaçons (110, 111, 11) comprenant des informations sur les colis contrefaits précédemment trouvés,
- la fourniture de données d'informations sur au moins un colis (101), d'informations visibles, les informations étant au moins l'une parmi :

- des données textuelles ;
de préférence, des données relatives à l'expéditeur et/ou au destinataire du colis (101), telles qu'un ou plusieurs noms, sociétés, adresses, codes postaux, numéros de téléphone, et/ou
- des données d'image ;
des données d'un ou de plusieurs autocollants apposés sur le colis, tels que le code-barres ou le logo, le partenaire de livraison, la déclaration en douane, l'étiquette d'expédition, le matériau d'emballage, la couleur de l'emballage, les données d'informations physiques, telles que la taille ou le poids,

- le téléchargement et le stockage des données fournies, d'un texte et/ou d'une image, dans la base de données sur les contrefaçons (110, 111, 112),
- la comparaison des données fournies par le colis aux données déjà stockées dans la base de données des contrefaçons et la recherche des correspondances,
- détecter des correspondances exactes ou des correspondances de données à forte similarité,

- s'il existe des correspondances exactes ou des correspondances à forte similarité ;

- déterminer la possibilité, en %, que le colis soit un colis contrefait en utilisant un algorithme de comparaison des contrefaçons,
- si la possibilité de contrefaçon est supérieure à un seuil prédéterminé, le colis est choisi pour un examen plus approfondi,

- si la poursuite de l'enquête aboutit à une détermination positive de la contrefaçon, remettre le colis à l'entité responsable, aux douanes, en vue d'une éventuelle saisie, ou
- si l'examen plus approfondi aboutit à une détermination négative de la contrefaçon, le colis est libre de poursuivre sa route normalement, ou
- s'il n'est pas clair que le contenu du colis est une contrefaçon, communiquer avec les détenteurs de droits de propriété intellectuelle et partager les données relatives au colis, puis prendre une décision sur le caractère contrefait ou non du contenu du colis, ou

- s'il n'y a pas de correspondance exacte ou de forte similarité, aucune analyse supplémentaire n'est effectuée,

dans laquelle le procédé comprend en outre l'étape suivante ;
- si l'une quelconque possibilité de contrefaçon est détectée par l'algorithme de comparaison des contrefaçons, communiquer avec l'installation de tri des colis associée et attribuer une goulotte de tri personnalisée au colis (101), ledit colis se dirigeant automatiquement vers cette goulotte au cours du tri.

**2.** Procédé selon la revendication 1, dans lequel le procédé comprend en outre au moins l'une des étapes consistant à :

- la normalisation des données textuelles des informations d'expédition et le fait de les rendre comparables à d'autres informations d'expédition stockées dans la base de données des contrefaçons (110, 111, 112), et/ou
- l'extraction d'informations des données d'image et la création d'une représentation mathématique de l'image et sa comparaison avec d'autres données stockées dans la base de données des contrefaçons (110, 111, 112).

**3.** Procédé selon l'une quelconque des revendications précédentes, dans lequel le procédé comprend en outre l'étape de lecture du texte d'une image par reconnaissance optique de caractères (OCR) et/ou par vidéocodage.

**4.** Procédé selon l'une quelconque des revendications précédentes, dans lequel le procédé comprend en outre l'étape d'analyse des données d'image et de création d'informations numériques de l'image.

**5.** Procédé selon l'une quelconque des revendications précédentes, dans lequel le procédé comprend en outre au moins l'une des étapes consistant à :

- la comparaison, image par image, d'une image provenant d'un colis (101) et des images stockées dans la base de données des contrefaçons (110, 111, 112), et comparer ainsi si les mêmes données d'image ont été trouvées sur des emballages de contrefaçon trouvés précédemment, et/ou
- la réalisation d'une comparaison texte à texte des données textuelles d'un colis (101) et des données textuelles stockées dans la base de données (110, 111, 112), et comparer ainsi si les mêmes données textuelles, telles que les informations relatives à l'expéditeur et/ou au destinataire, ont été trouvées sur des colis de contrefaçon précédemment découverts.

**6.** Procédé selon l'une quelconque des revendications précédentes, dans lequel le procédé comprend en outre l'étape consistant à convertir les adresses, telles que l'expéditeur et/ou le destinataire, en coordonnées géographiques, de manière à tracer virtuellement un rayon autour de l'emplacement du géocode, soit un rayon de 200 à 20 mètres.

**7.** Procédé selon l'une quelconque des revendications précédentes, dans lequel une base de données locale de contrefaçons (111) est fournie et située dans un centre de tri associé, et dans lequel l'étape consistant à comparer les données fournies du colis (101) aux données déjà stockées dans la base de données de contrefaçons et à rechercher des correspondances et l'étape consistant à détecter des correspondances de données exactes ou des correspondances de données à forte similitude sont effectuées localement à l'aide d'une machine virtuelle connectée à la base de données locale.

**8.** Procédé selon l'une quelconque des revendications précédentes, dans lequel le procédé comprend en outre l'étape consistant à fournir un système de gestion de contenu (CMS) en ligne connecté à la base de données des contrefaçons (110, 111, 112), ledit CMS permettant aux marques d'enregistrer et de téléverser leurs données d'informations sur les contrefaçons connues, lesdites informations étant :

- des informations de livraison relatives à la contrefaçon telles que le nom, la raison sociale, l'adresse, le numéro de téléphone, le code postal de l'expéditeur et/ou du destinataire et/ou de l'importateur du colis (101),
- des images d'un colis de contrefaçons déjà intercepté,
- tout identifiant peut se trouver sur un colis, par exemple des autocollants, des logos, du ruban adhésif et du matériel d'emballage, l'emplacement de l'étiquette d'expédition, la taille/le poids du colis, et/ou
- toute autre information pertinente sur une contrefaçon antérieure.

**9.** Procédé selon l'une quelconque des revendications précédentes, dans lequel, lors de la comparaison de données textuelles, l'algorithme de comparaison a la formule mathématique suivante :

$$\% \text{ de similarité} = \frac{(\text{nombre de caractères correspondants}) * 2}{\text{nombre de caractères (nom1+nom2)}}$$

et/ou

EP 4 323 939 B1

$$\% \text{ de similarité} = \frac{(\text{nombre de mots correspondants}) * 2}{\text{nombre de mots (adresse1+adresse2)}}$$

**10.** Procédé selon l'une quelconque des revendications précédentes, dans lequel l'examen plus approfondi d'un colis(101) présentant une possibilité de contrefaçon comporte un contrôle visuel du colis et un contrôle du contenu du colis, et

dans lequel le contrôle visuel est effectué par un facilitateur, un facilitateur humain, qui ouvre le colis et vérifie le contenu du colis, et
dans lequel les étapes de contrôle visuel varient en fonction de la marque représentée ou contrefaite dans le contenu du colis.

**11.** Procédé selon l'une quelconque des revendications précédentes, dans lequel les résultats de la comparaison et/ou des étapes d'examen du procédé sont appliqués à l'apprentissage automatique pour former l'algorithme de comparaison des contrefaçons en vue de futures détections de colis contrefaits, en ajustant la pondération de l'algorithme de comparaison à l'aide du concept suivant :

- si l'algorithme de comparaison prend une décision correcte, l'authenticité des données utilisées pour la prise de décision est accrue, et
- si l'algorithme de comparaison prend une mauvaise décision, l'authenticité des données utilisées pour la prise de décision est diminuée.

**12.** Système permettant la détection d'un colis contenant un produit contrefait dans un centre de tri de colis associé, à l'aide du procédé selon la revendication 1, dans lequel le système comprend ;

- au moins une base de données sur les contrefaçons (110, 111, 112) comprenant des informations sur les colis contrefaits (101) trouvés précédemment,
- au moins une caméra ou un scanner monté dans ou sur un centre de tri de colis associé, la caméra prenant des images de chaque colis pendant le tri, lesdites images sont envoyées à une base de données et utilisées dans un algorithme de comparaison des contrefaçons,
- un ordinateur pour exécuter l'algorithme de comparaison des contrefaçons connecté au centre de tri des colis associé, l'algorithme calculant une possibilité de contrefaçon, en %, que le colis soit un colis contrefait par comparaison avec des contrefaçons précédemment détectées, et
- un centre permettant de poursuivre l'examen d'un colis si la possibilité de contrefaçon est supérieure à un seuil prédéterminé et si le colis est choisi pour un examen plus approfondi.

**13.** Système de base de données de contrefaçons (110) pour la mise en œuvre du procédé selon la revendication 1, comprenant :

- une base de données centralisée des contrefaçons (112) et
- au moins une base de données locale de contrefaçons (111), ou une pluralité de bases de données locales,

dans lequel la base de données centralisée et l'au moins une base de données locale sur les contrefaçons sont connectées par le biais d'un système informatique distribué.

**14.** Programme d'ordinateur comprenant des instructions qui, lorsque le programme est exécuté par un ordinateur, amènent l'ordinateur à effectuer au moins les étapes suivantes du procédé de la revendication 1 :

- comparer les données fournies d'un colis (101) aux données déjà stockées dans une base de données de contrefaçons (110, 111, 112) et rechercher les correspondances, et
- détecter des correspondances exactes ou des correspondances de données à forte similarité,

- s'il existe des correspondances exactes ou des correspondances à forte similarité ;

- déterminer la possibilité, de préférence en %, que le colis soit un colis contrefait à l'aide d'un algorithme de comparaison des contrefaçons,
- si la possibilité de contrefaçon est supérieure à un seuil prédéterminé, le colis est choisi pour un examen plus approfondi,

- s'il n'y a pas de correspondance exacte ou de forte similarité, aucune analyse supplémentaire n'est effectuée.

**15.** Procédé mis en œuvre par informatique permettant la détection d'un colis contenant un produit illégal, tel que des stupéfiants ou des médicaments non autorisés, dans un centre de tri de colis associé, dans lequel le procédé comprend les étapes consistant à :

- la fourniture d'au moins une base de données pour les colis illégaux (110, 111, 11) comprenant des informations sur les colis illégaux précédemment trouvés,
- la fourniture de données d'informations sur au moins un colis (101), d'informations visibles, les informations étant au moins l'une parmi :

- des données textuelles ;
des données relatives à l'expéditeur et/ou au destinataire du colis (101), telles qu'un ou plusieurs noms, sociétés, adresses, codes postaux, numéros de téléphone, et/ou
- des données d'image ;
des données d'un ou de plusieurs autocollants apposés sur le colis, tels que le code-barres ou le logo, le partenaire de livraison, la déclaration en douane, l'étiquette d'expédition, le matériau d'emballage, la couleur de l'emballage, les données d'informations physiques, telles que la taille ou le poids,

- le téléchargement et le stockage des données fournies, de préférence d'un texte et/ou d'une image, dans la base de données pour les colis illégaux (110, 111, 112),
- la comparaison des données fournies du colis aux données déjà stockées dans la base de données et la recherche des correspondances,
- détecter des correspondances exactes ou des correspondances de données à forte similarité,

- s'il existe des correspondances exactes ou des correspondances à forte similarité ;

- la détermination de la possibilité, en %, que le colis soit un colis contenant des produits illégaux en utilisant un algorithme de comparaison,
- si la possibilité d'un produit illégal est supérieure à un seuil prédéterminé, le colis est choisi pour un examen plus approfondie,

- si l'examen supplémentaire aboutit à une détermination positive d'illégalité, remettre le colis à l'entité responsable, aux douanes et/ou à la police, ou
- si l'examen supplémentaire aboutit à une détermination négative quant à l'illégalité, le colis est libre de poursuivre sa route normalement, ou
- s'il n'est pas clair que le contenu du colis est un produit illégal, communiquer avec un spécialiste, des douanes et/ou de la police, et partager les données du colis, puis prendre une décision sur le fait que le contenu du colis est ou n'est pas une contrefaçon, ou

- s'il n'y a pas de correspondance exacte ou de forte similarité, aucune analyse supplémentaire n'est effectuée,

dans laquelle le procédé comprend en outre l'étape suivante ;
- si l'un quelconque contenant un produit illégal est détecté par l'algorithme de comparaison, communiquer avec le centre de tri de colis associé et attribuer une goulotte de tri personnalisée pour le colis (101), ledit colis se dirige vers cette goulotte automatiquement au cours du tri.

Fig. 1

Logistics Site →

Discharge Parcel at dedicated chute → SAC/Sorter Control → [parcel 101]

Counterfeit → Dedicated Seizure Process (with Customs/Local police)

Not Counterfeit → Back to Sortation

Facilitator

Counterfeit? Yes/No — Device with DB Interface

Improve quality of database/Store Images of Counterfeit Parcel and Sender/Receiver Information

# Fig. 1 (Continued)

EP 4 323 939 B1

Brand provides data

We put the data into the sorter

Sorter detects & sideloads the parcel

Facilitator steps in
Investigation starts

Facilitator opens the parcel and evaluates content

Takes photos of the content and puts on platform

Brand joins evaluation (if needed)

Not-Counterfeit

Facilitator closes the parcel and case

Facilitator puts the parcel back to sortation

Counterfeit

System prepares the claim automatically

Customs informed about the parcel

Facilitator hands the parcel to customs

Customs seize the parcel

Fig. 2

**PRE-CATCH**

**CATCH**

CONCEPT LEVEL

Brand

Brand

Brand

Brand

Counterfeit Database

Brand

Brand

Brand

Logistic/Delivery Firms

SOFTWARE

COUNTERFEIT STATISTICS

COUNTERFEIT DATA UPLOAD

COUNTERFEIT PHOTO UPLOAD

DATABASE ACCESS

AUTOMATED CLAIMS

PROACTIVE ACTION

EP 4 323 939 B1

Fig. 3

# AFTER-CATCH

Customs Communication

Counterfeit Case Claim

Counterfeit Claim Tracking

Counterfeit Item Investigation

Countercheck

Counterfeit Item Decision

Counterfeit Item Evaluation

EUIPO

360 ACCESS

BLOCK COUNTERFEITS

PARCEL SEIZURE

# Fig. 3 (Continued)

EP 4 323 939 B1

**REFERENCES CITED IN THE DESCRIPTION**

**Patent documents cited in the description**

- US 2014324716 A1
- US 2014217177 A1